# EUROPEAN PATENT SPECIFICATION

(11) **EP 1 306 001 B1**
(45) Date of publication and mention of the grant of the patent: **15.09.2010**
(21) Application number: 02023970.3
(22) Date of filing: 25.10.2002
(51) Int. Cl.: A01D 90/10, A01C 3/06

(54) **Multipurpose manure spreading device**
Mehrzweckstallmiststreuer
Dispositif d'épandage de fumier multifonctionnel

(30) Priority: 25.10.2001 SI 200100278
(43) Date of publication of application: 02.05.2003
(73) Proprietor: Duhovnik, Joze, 1215 Medvode (SI); Benedicic, Janez, 4228 Zelezniki (SI); Bernik, Rajko, 4220 Skofja Loka (SI)
(72) Inventor: Duhovnik, Joze, 1215 Medvode (SI); Benedicic, Janez, 4228 Zelezniki (SI); Bernik, Rajko, 4220 Skofja Loka (SI)
(74) Representative: Viering, Jentschura & Partner

(56) References cited:
- EP-A- 0 084 872
- EP-A- 0 651 096
- CH-A- 686 855
- DE-A- 4 109 417
- DE-B- 1 148 795
- DE-U- 29 906 960

## Description

The subject of this invention is a multipurpose manure spreading device which enables the spreading of organic manure to the rear of the machine (backwards) or laterally (sideways).

The technical problem this invention is solving is the ability to spread manure backwards or sideways, in order to enable optimum fertilization of a selected surface. A review of the existing variants has shown that there is no machine available on the market that would enable spreading of organic manure both backwards and sideways with the same device. Patent CH 691788 designates a manure spreader which enables manure to be spread only sideways. It has manure cutting blades which consume a considerable amount of energy. Cut manure clumps fly along the circumference of the container in its enclosed space, towards the opening through which they are sprayed onto the desired surface. Our invention, on the other hand, contains only distribution blades, while the space is open. For this reason, energy consumption is lower and the surfaces around the rotors are easier to clean. Patents Nos. US 4,801,085 and US 5,265,809 also designate manure spreaders that only enable lateral spreading. Thus, scooping and distribution of the manure onto the rotor are done from within the container, which increases energy consumption and considerably decreases the spreading width compared to our invention. Patent No. FR 2759850 designates a manure spreader with a spreading device that enables only backwards spreading.

DE 299 06 960 U1 discloses a manure spreading device according to the preamble of claim 1 comprising a pair of large rotors and a pair of small rotors between the large rotors which are horizontally mounted below an opening of a hood through which manure will be supplied to the rotors by crushing rollers within the enclosed space of the hood.

The above-mentioned technical problem will be solved by a multipurpose manure spreading device according to the independent claim.

The manure spreading device for spreading clumps of organic manure according to the invention comprises manure crushing rollers one above the other and transporting the clumps of manure to a rotor assembly, two small rotors and two large rotors installed on a carrier beam, so that one rotor pair of one small rotor and an adjacent one of the large rotors are mounted in a plane that is parallel to the plane in which the other rotor pair of the other small rotor and the other large rotor are mounted, wherein the small rotor and the large rotor of each rotor pair are driven to revolve in the same direction and the large rotors are driven to revolve in opposite directions in a horizontal position of the rotor assembly below the crushing rollers to spread the clumps of manure in a backward direction. Further, this device is characterized in that the large rotors are arranged between the small rotors, and the crushing rollers are installed in an open casing to transport the manure to the large rotors. The carrier beam of the rotor assembly is attached to the casing by hinges and an angle change assembly is mounted to the casing and to the carrier beam to change the position of the rotor assembly by the carrier beam from the horizontal position below the crushing rollers which are positioned in front of the rotor assembly, to a vertical position of the rotor assembly behind the crushing rollers in which all rotors of the rotor assembly are driven to revolve in the same direction to spread the manure transported by the crushing rollers in a sideways direction.

The advantage of this device/invention is that it enables the operator to change between spreading manure backwards and sideways using the same device. Thus, both methods of manure spreading can be used to fertilize a desired surface. Another one of its advantages is a lower energy consumption which stems from the fact that the rotors are separated from direct contact with manure in the container, since the crushing rollers are performing the transport function.

The invention is illustrated with the following figures:

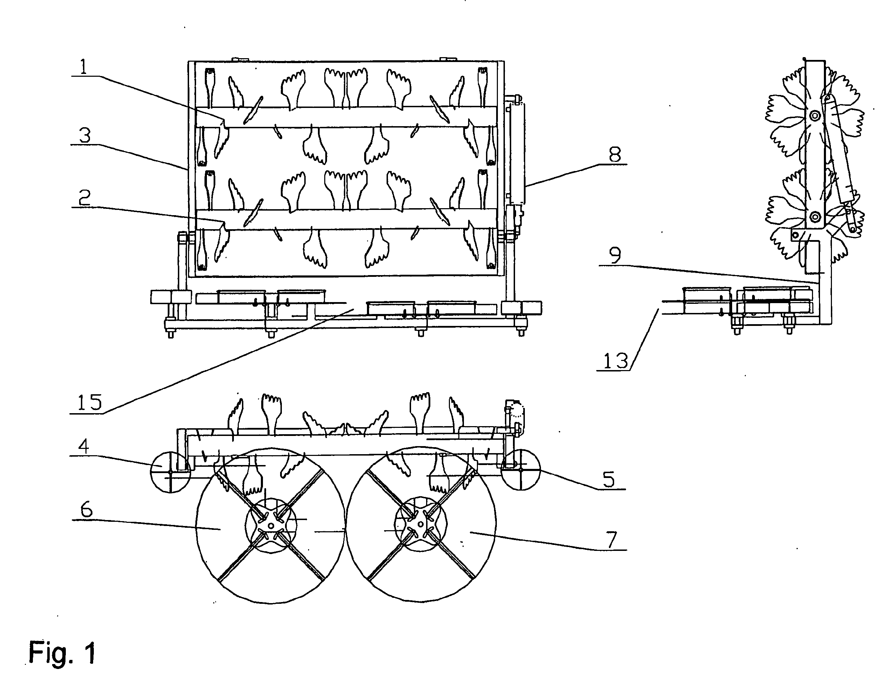

Figure 1: Device in the position for spreading manure backwards

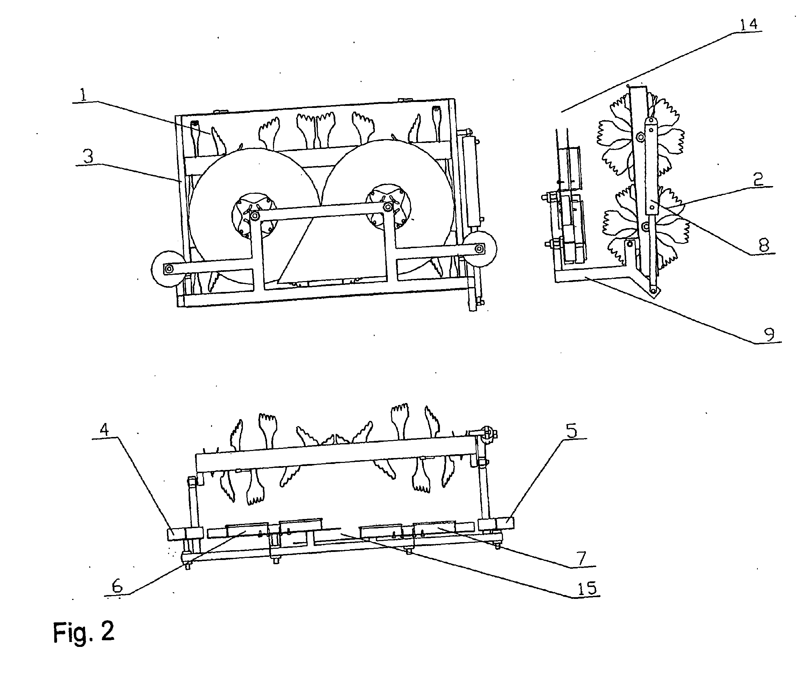

Figure 2: Device in the position for spreading manure sideways

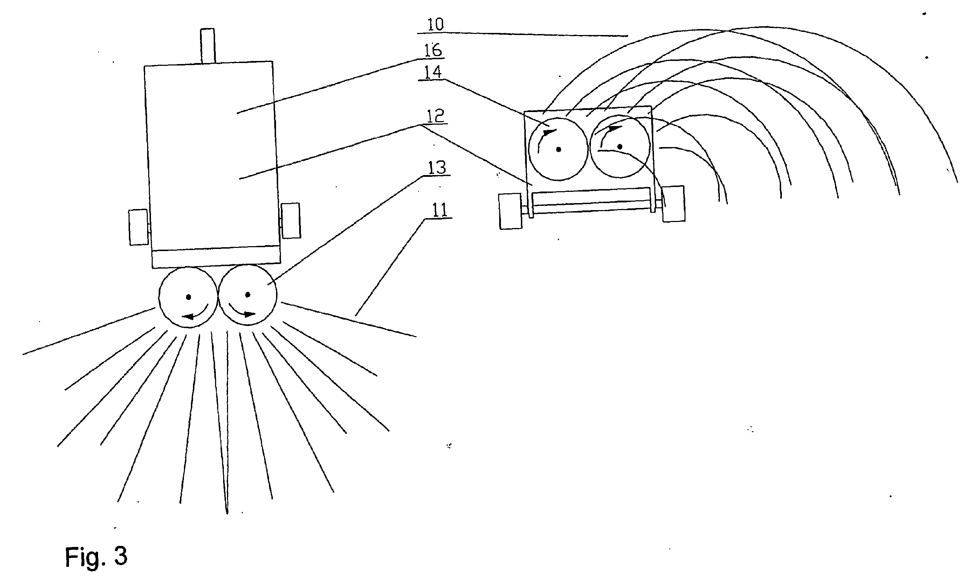

Figure 3: Backwards and sideways spreading of manure

The device consists of manure crushing rollers (1, 2), which are installed in bearings in their casing (3), two small rotors (4, 5), which ensure uniformity of sideways spreading, two larger rotors (6, 7), an assembly for angle change (8) and a carrier beam for the rotors (9). The rotors are installed in bearings and attached to the rotor carrier beam (9). On one end, the angle change assembly (8) is clamped onto the casing (3) for the crushing rollers, and on the other onto the rotor carrier beam (9). The crushing rollers (1, 2), which are installed in bearings in their casing (3), crush and transport manure to the rotors (6, 7) which revolve in the opposite directions, thus causing movement of the manure clumps 1 to 5 cm along the rotor (6, 7) until they leave the rotor (6, 7). Each small rotor (4, 5) revolve in the same direction as each adjacent large rotor (6, 7). Manure clumps that would otherwise fall on the ground by the side of the spreader are thus uniformly spread by the small rotor (4, 5) along the entire side the device. The rotor carrier beam (9), onto which the rotors (4, 5, 6, 7) are installed in bearings, is attached to the casing for crushing rollers via hinges. Since the crushing rollers mash and break pieces of manure from the container and the rotors are attached to the rotor carrier beam (9), the rotors (4, 5, 6, 7) are prevented from coming into direct contact with the pile of manure in the container (16). Using an angle change assembly (8), the method of spreading can be changed from spreading backwards (11) to spreading sideways (10) with respect to the spreading device (12), in the following manner: the rotor carrier beam (9) changes the position of the rotors (4, 5, 6, 7) from horizontal (13) to vertical (14); whereby the angle of inclination of the rotors (4, 5, 6, 7) deviates by ±20° from the horizontal (13) or vertical position (14). When the rotors (4, 5, 6, 7) are in the vertical position (14), all rotors (4, 5, 6, 7) revolve in the same direction. Their rpms may be varied from 0 min⁻¹ to 1400 min⁻¹ and the direction of rotation of the rotors (4, 5, 6, 7) can also be changed. This ensures spreading of manure to the desired side. The rotors (4, 6) are mounted onto the rotor carrier beam (9) in a plane that is parallel to that of the rotors (5, 7). The distance between these planes (15) ranges from 0 to twice the thickness of the large rotor (6). In this manner, it can be achieved that while organic manure is spread sideways (10), its clumps do not pass from the large rotor (6) on the left to the large rotor (7) on the right and vice versa. The other parts function in the same way as when manure is spread backwards (11).

## Claims

1. A manure spreading device for spreading clumps of organic manure, comprising
manure crushing rollers (1, 2) one above the other and transporting the clumps of manure to a rotor assembly,
two small rotors (4, 5) and two large rotors (6, 7) installed on a carrier beam (9), so that one rotor pair of one small rotor (4) and an adjacent one (6) of the large rotors are mounted in a plane that is parallel to the plane in which the other rotor pair of the other small rotor (5) and the other large rotor (7) are mounted, wherein the small rotor and the large rotor of each rotor pair are driven to revolve in the same direction and the large rotors are driven to revolve in opposite directions in a horizontal position of the rotor assembly below the crushing rollers (1, 2) to spread the clumps of manure in a backward direction,
**characterized in that**
the large rotors (6, 7) are arranged between the small rotors (4, 5), and
the crushing rollers (1, 2) are installed in a casing (3) to transport the manure to the large rotors (6, 7),
wherein the carrier beam (9) of the rotor assembly is attached to the casing (3) by hinges and an angle change assembly (8) is mounted to the casing (3) and to the carrier beam (9) to change the position of the rotor assembly by the carrier beam (9) from the horizontal position below the crushing rollers (1, 2) which are positioned in front of the rotor assembly, to a vertical position of the rotor assembly behind the crushing rollers (1, 2) in which all rotors of the rotor assembly are driven to revolve in the same direction to spread the manure transported by the crushing rollers (1, 2) in a sideways direction.

2. The manure spreading device according to claim 1, wherein the planes in which the rotor pairs (4, 6; 5, 7) are mounted, are spaced by twice the thickness of the large rotors (6, 7) or less.

3. The manure spreading device according to claims 1 or 2, wherein the speed of rotation of the rotors (4, 5, 6, 7) in the vertical position can be changed from 0 min⁻¹ to 1400 min⁻¹ and the direction of rotation of the rotors (4, 5, 6, 7) can be changed.

## Patentansprüche

1. Stallmiststreuvorrichtung zum Verteilen von Klumpen organischen Stallmists, aufweisend
Stallmistzerkleinerungsrollen (1, 2), eine über der anderen, welche die Stallmistklumpen zu einer Rotoranordnung transportieren,
zwei kleine Rotoren (4, 5) und zwei große Rotoren (6, 7), die an einem Trägerbalken (9) angebracht sind, so dass ein Rotorpaar aus einem kleinen Rotor (4) und einem benachbarten (6) der großen Rotoren in einer Ebene montiert ist, die parallel zu der Ebene liegt, in der das andere Rotorpaar des anderen kleinen Rotors (5) und des anderen großen Rotors (7) montiert ist, wobei der kleine Rotor und der große Rotor jedes Rotorpaars so angetrieben werden, dass sie sich in derselben Richtung drehen, und die großen Rotoren in einer horizontalen Position der Rotoranordnung unterhalb der Zerkleinerungsrollen (1, 2) so angetrieben werden, dass sie sich in entgegengesetzte Richtungen drehen, so dass die Klumpen des Stallmists in Rückwärtsrichtung verteilt werden,
**gekennzeichnet dadurch, dass**
die großen Rotoren (6, 7) zwischen den kleinen Rotoren (4, 5) angeordnet sind, und
die Zerkleinerungsrollen (1, 2) in einem Gehäuse (3) angeordnet sind, um den Stallmist zu den großen Rotoren (6, 7) zu transportieren,
wobei der Trägerbalken (9) der Rotoranordnung mittels Gelenken an dem Gehäuse (3) angebracht ist und eine Winkeländerungsanordnung (8) an dem Gehäuse (3) und dem Trägerbalken (9) montiert ist, um die Position der Rotoranordnung mittels des Trägerbalkens (9) von der horizontalen Position unter den Zerkleinerungsrollen (1, 2), welche vor der Rotoranordnung positioniert sind, in eine vertikale Position der Rotoranordnung hinter den Zerkleinerungsrollen (1, 2) zu wechseln, in der alle Rotoren der Rotoranordnung so angetrieben werden, dass sie sich in derselben Richtung drehen, so dass der Stallmist von den Zerkleinerungsrollen (1, 2) in Seitwärtsrichtung transportiert wird.

2. Stallmiststreuvorrichtung nach Anspruch 1,
wobei die Ebenen, in denen die Rotorpaare (4, 6; 5, 7) montiert sind, in einem Abstand von dem Doppelten der Dicke der großen Rotoren (6, 7) oder weniger angeordnet sind.

3. Stallmiststreuvorrichtung nach Anspruch 1 oder 2,
wobei die Drehzahl der Rotoren (4, 5, 6, 7) in der vertikalen Position von 0 min⁻¹ bis 1400 min⁻¹ geändert werden kann und die Drehrichtung der Rotoren (4, 5, 6, 7) geändert werden kann.

## Revendications

1. Dispositif d'épandage de fumier pour épandre des mottes de fumier organique, comprenant :
des rouleaux d'écrasement de fumier (1, 2) l'un au-dessus de l'autre et transportant les mottes de fumier vers un ensemble de rotor,
deux petits rotors (4, 5) et deux grands rotors (6, 7) installés sur une poutre de support (9), de sorte qu'une paire de rotors composée d'un petit rotor (4) et d'un rotor adjacent (6) des grands rotors est montée dans un plan qui est parallèle au plan dans lequel l'autre paire de rotors composée de l'autre petit rotor (5) et de l'autre grand rotor (7) est montée, dans lequel le petit rotor et le grand rotor de chaque paire de rotors sont entraînés pour tourner dans la même direction et les grands rotors sont entraînés pour tourner dans des directions opposées dans une position horizontale de l'ensemble de rotors au-dessous des rouleaux d'écrasement (1, 2) pour épandre les mottes de fumier dans une direction vers l'arrière,
**caractérisé en ce que** :
les grands rotors (6, 7) sont agencés entre les petits rotors (4, 5), et
les rouleaux d'écrasement (1, 2) sont installés dans un boîtier (3) pour transporter le fumier vers les grands rotors (6, 7),
dans lequel la poutre de support (9) de l'ensemble de rotor est fixée au boîtier (3) par des charnières et un ensemble de changement d'angle (8) est monté sur le boîtier (3) et sur la poutre de support (9) pour modifier la position de l'ensemble de rotor par la poutre de support (9) à partir de la position horizontale au-dessous des rouleaux d'écrasement (1, 2) qui sont positionnés en face de l'ensemble de rotor, vers une position verticale de l'ensemble de rotors derrière les rouleaux d'écrasement (1, 2) dans lesquels tous les rotors de l'ensemble de rotor sont entraînés pour tourner dans la même direction afin d'épandre le fumier transporté par les rouleaux d'écrasement (1, 2) dans une direction latérale.

2. Dispositif d'épandage de fumier selon la revendication 1, dans lequel les plans dans lesquels les paires de rotors (4, 6 ; 5, 7) sont montées, sont espacés selon une valeur égale à deux fois la largeur des grands rotors (6, 7) ou moins.

3. Dispositif d'épandage de fumier selon la revendication 1 ou 2, dans lequel la vitesse de rotation des rotors (4, 5, 16, 7) dans la position verticale peut être modifiée de 0 min⁻¹ à 1 400 min⁻¹ et la direction de rotation des rotors (4, 5, 6, 7) peut être modifiée.
